# EUROPEAN PATENT APPLICATION

(11) **EP 4 806 268 A1**
(43) Date of publication of application: **16.09.2026**
(21) Application number: 26163852.2
(22) Date of filing: 11.03.2026
(51) Int. Cl.: A01N 59/06, A01N 37/44, A01P 3/00, A01P 7/04, A01P 17/00, A01P 21/00

(54) **A GLUTAMIC ACID-METALCOMPLEX AND ITS USE THEREOF**

(30) Priority: 11.03.2025 US 202563769805 P
(71) Applicant: Aminomatrix Labs Co., Ltd., 221425 New Taipei City Taiwan (R.O.C.) (TW)
(72) Inventor: I-CHEN, Li, 221425 New Taipei City (TW); CHI-JUNG, Chen, 221425 New Taipei City (TW)
(74) Representative: Rapisardi, Mariacristina

(57) **Abstract**

The present disclosure provides a glutamic acid-metal complex, where the metal is a magnesium ion or a calcium ion. The present disclosure further provides a use of the glutamic acid-metal complex for enhancing plant tolerance to biotic and abiotic stresses, and for aiding damaged plants in resuming growth, flowering, and fruiting. By using the glutamic acid-metal complex of the present disclosure, plants' adaptability to environmental stresses can be enhanced, and crop yield can be improved with significantly reduced adverse effects on the plants themselves or on the environment.

## Description

### 1. Field of the Invention

The present disclosure relates to a glutamic acid-metal complex, and in particular to a glutamic acid-metal complex for enhancing plant tolerance to stress conditions.

### [Description of the Related Art]

In recent years, crops have been affected by frequent occurrences of extreme weather or pests and diseases, leading to stunted growth, reduced yields, and even severe crop failures. For example, in environments with drastic changes in temperature or precipitation, massive flower and fruit drop often occurs, causing significant damage to agriculture.

To address the aforementioned growth stresses, conventional agriculture typically relies on chemical pesticides or fertilizers. While these can reduce the problems such as pests and diseases, they also pose risks of environmental pollution and chemical residues in crops, and prolonged use may even lead to the development of drug resistance in pathogens or pests. Previous studies have shown that amino acids, acting as signaling molecules or metabolic products in plant physiology, can regulate plant tolerance to stresses, while free metal ions can also participate in stress-related responses as nutrients or enzyme cofactors.

### 2. Description of the Related Art

However, plants already under stress may exhibit limited root uptake due to poor growth conditions, and excessive accumulation of free metal ions may instead cause the oxidative damage. Therefore, a composition for use in plants that can be used long-term and is effective in improving tolerance to multiple stresses remains to be developed.

Based on the limitations and shortcomings of the prior art described above, the present disclosure provides a glutamic acid-metal complex, where the metal is an alkaline earth metal ion.

According to the embodiments of the present disclosure, the alkaline earth metal ion is a magnesium ion or a calcium ion.

According to the embodiments of the present disclosure, if the alkaline earth metal ion is the magnesium ion, its structure is represented by the following formula (I); if the alkaline earth metal ion is the calcium ion, its structure is represented by the following formula (II):

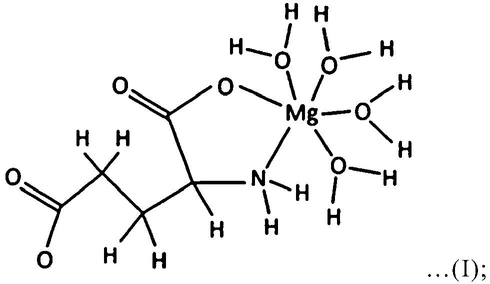

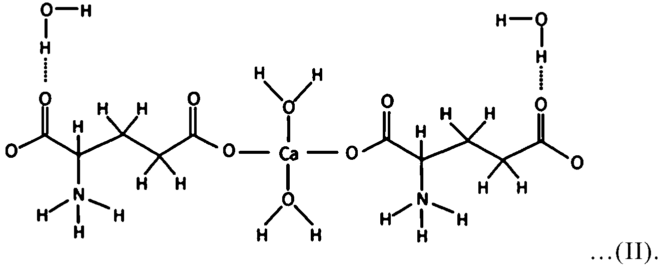

The present disclosure further provides a use of the glutamic acid-metal complex described above, where the use is for enhancing plant tolerance to stress conditions.

According to the embodiments of the present disclosure, the stress conditions comprise biotic stress or abiotic stress.

According to the embodiments of the present disclosure, the biotic stress includes fungi, bacteria, microorganisms or insects; and the abiotic stress includes extreme weather conditions or herbicide damages.

According to the embodiments of the present disclosure, the fungus is *Fusarium.*

According to the embodiments of the present disclosure, enhancing plant tolerance to stress conditions is to promote plant growth, increase yields, or help crops under stress resume fruit set.

According to the embodiments of the present disclosure, enhancing plant tolerance to the stress conditions is to increase fruit tolerance to stresses of storage and transport, increase fruit water content, or increase fruit size.

According to the embodiments of the present disclosure, a use amount of the glutamic acid-metal complex is 250 ppm or less.

In summary, the present disclosure provides a glutamic acid-metal complex, specifically calcium glutamate or magnesium glutamate, The present disclosure further provides a use of a glutamic acid-metal complex, which can be used to simultaneously enhance plant tolerance to both biotic and abiotic stresses. Compared to conventional chemical pesticides, the glutamic acid-metal complex achieves antibacterial effects, insecticidal effects or restores the growth of damaged plants while avoiding the harm to plants and the environment caused by long-term use, as well as the development of drug-resistant pathogens or pests.

### BRIEF DESCRIPTION OF THE DRAWINGS

FIG. 1 shows the photographs of *Brassica rapa chinensis* infected with fungi, with and without applying the glutamic acid-metal complexes of the present disclosure.
FIG. 2 shows a result of quantifying the leaf area based on FIG. 1 of the present disclosure.
FIGS. 3A to 3D show the photographs of *Brassica rapa chinensis* and aphids co-cultured, with and without applying the glutamic acid-metal complexes of the present disclosure.
FIGS. 4A and 4B show the photographs of water spinach treated with and without glutamic acid-metal under high-temperature and water-deficient conditions.
FIGS. 5A and 5B show the photographs of coffee trees that had shed their flowers and fruits, in which secondary flowers and fruits grew after application of the glutamic acid-metal complex of the present application.
FIGS. 6A to 6C show the photographs of the secondary fruits growing to catch up with the size of the primary fruits after application of the glutamic acid-metal complex of the present application.
FIGS. 7A and 7B show the photographs of Malabar chestnut trees affected by chemical pesticide damage, which sprouted new shoots after application of the glutamic acid-metal complex of the present application.
FIGS. 8A and 8B show the photographs of cabbage leaves affected by chemical pesticide recovering to a healthy state after application of the glutamic acid-metal complex of the present application.

### DETAILED DESCRIPTION OF THE INVENTION

It should be understood that both the general description above and the detailed description below are provided for illustrative and explanatory purposes only and are not intended to limit the scope of the claims sought for the present disclosure.

Unless otherwise defined, all technical and scientific terms used herein have the meanings commonly understood by those skilled in the art to which the present disclosure pertains.

The articles "a," "an," and "any" used in the present specification refer grammatically to one or more (e.g., at least one).

The primary objective of the present disclosure is to provide a glutamic acid-metal complex, where the metal is an alkaline earth metal ion.

Specifically, the glutamic acid used in the present disclosure is a single amino-acid molecule, rather than a peptide.

In the present specification, the term "peptide" refers to a molecule formed by two or more amino acids linked by peptide bonds.

In the embodiments of the present disclosure, the alkaline earth metal ion is a magnesium ion or a calcium ion.

In the embodiments of the present disclosure, the glutamic acid forms a complex with the magnesium ion, as shown in the following formula (I); the glutamic acid forms a complex with the calcium ion, as shown in the following formula (II):

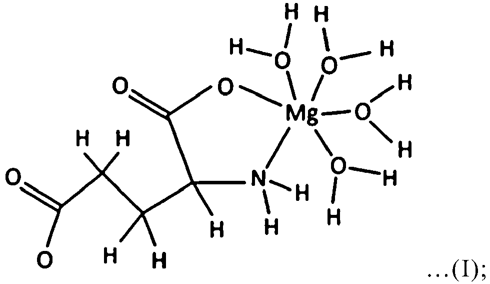

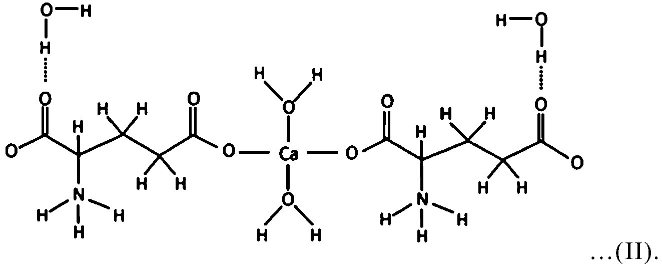

In the present specification, the term "complex" refers to a complex formed by two or more chemical substances through coordinate bonds (coordinate covalent bonds), Coulombic electrostatic interactions (e.g., ion-ion, ion-dipole, etc.), hydrogen bonds, van der Waals forces, hydrophobic interactions, or other intermolecular interactions, including but not limited to chelates.

In the present specification, the term "chelate" refers to a complex formed when a ligand binds to the same metal ion through two or more binding sites simultaneously. Specifically, in the present disclosure, the metal ions magnesium or calcium form complexes through chelation with the amino acid glutamic acid. These complexes are more stable than free metal ions and prevent the metal ions from combining with phosphate or carbonate ions in the soil to form easily precipitating compounds or be immobilized by the soil, making it difficult for plants to uptake; compared to conventional chemical pesticides, the glutamic acid-metal complexes are also less prone to decomposition by high temperatures or washing away by heavy rain from the soil or plant surfaces. Once amino acid-metal complexes are formed, the metal ions can enter the plant through the amino acid uptake pathways of plants.

Specifically, glutamate-metal complexes enhance the responses of plants to biotic and abiotic stresses by inducing their endogenous defense mechanisms.

In the present specification, the term "extreme weather" refers to climatic conditions that deviate significantly from the long-term climatic averages or normal fluctuation ranges of a region, such as heavy rainfall, high salinity, drought, flooding, high temperatures, or low temperatures, which cause significant adverse effects on plant growth, such as wilting, yellowing, leaf curling, cessation of growth, or massive flower and fruit drop.

The present disclosure further provides a use of the glutamic acid-metal complex described above, where the use is for enhancing the plant tolerance to stresses.

In the embodiments of the present disclosure, the stress includes biotic or abiotic stress.

In the embodiments of the present disclosure, the biotic stress includes fungi, bacteria, microorganisms, or insects, while the abiotic stress includes extreme weather conditions or herbicide damages.

Specifically, the fungi or bacteria are plant pathogens, including but not limited to *Fusarium* spp., *Botrytis cinerea, Alternaria* spp., *Colletotrichum* spp., *Magnaporthe oryzae, Rhizoctonia solani, Phytophthora infestans*, *Xanthomonas* spp., *Pseudomonas syringae, Ralstonia solanacearum,* or *Erwinia* spp. In the embodiments of the present disclosure, the plant pathogen is of the genus *Fusarium.*

In the embodiments of the present disclosure, enhancing plant tolerance to the stress condition includes, but is not limited to, promoting plant growth, increasing yield, helping crops under stress resume fruit set, increasing fruit tolerance to stresses of storage and transport, increasing fruit water content, or increasing fruit size.

Specifically, the glutamic acid-metal complex of the present disclosure promotes plant regrowth by increasing leaf area to enhance photosynthetic efficiency; in addition, the glutamic acid-metal complex of the present disclosure can also improve fruit set by increasing the number of flowers, thereby increasing the yield of flowering and fruiting crops. In particular, for crops that exhibit flower and fruit drop due to abnormal weather or nutrient deficiency, the application of the amino acid-metal complex of the present disclosure can promote secondary flowering and fruiting in such crops, thereby reducing yield losses.

In the present specification, the terms "secondary flowers" and "secondary fruits" refer to flowers that bloom again and fruits that set again at the same site after the initial flowers and fruits have fallen off due to biotic or abiotic stresses. In contrast, "primary fruits" refer to fruits produced by the initial flowers that did not fall off due to stress.

In the embodiments of the present disclosure, a use amount of the glutamic acid-metal complex is 250 ppm or less.

Specifically, the concentrations of the glutamic acid-metal complexes used in the present disclosure are 50 ppm, 60 ppm, 70 ppm, 80 ppm, 90 ppm, 100 ppm, 110 ppm, 120 ppm, 130 ppm, 140 ppm, 150 ppm, 160 ppm, 170 ppm, 180 ppm, 190 ppm, 200 ppm, 210 ppm, 220 ppm, 230 ppm, 240 ppm, 250 ppm, or any value within the range of 50-250 ppm, or an interval comprising any two such values.

In addition, the glutamic acid-metal complex may be further formulated into plant culture promoters or additives for use in agriculture or horticulture, such as organic pesticides, irrigation solutions, foliar fertilizers, granular fertilizers, soil conditioners, suspension concentrates, powders, or sprays.

Specifically, methods of applying the glutamic acid-metal complex include, but are not limited to, applying it to the soil, preparing it in liquid form and directly irrigating the root zone of plants, spraying it directly onto the surface of leaves, or soaking seeds or seedlings in a solution containing the glutamic acid-metal complex.

### Examples

In the embodiments of the present disclosure, the aforementioned glutamic acid and a highly safe metal source, such as an oxide, hydroxide, or pure metal, are used based on the molecular weights of glutamic acid (147.13 g/mol), 24.31 g/mol for magnesium ions (Mg²⁺) and 40.08 g/mol for calcium ions (Ca²⁺) to calculate the required molar amounts, and chelation is carried out using methods well known to those skilled in the art to obtain magnesium glutamate (stock concentration) and calcium glutamate (stock concentration). Specifically, sources of magnesium ions or calcium ions include, but are not limited to, metal compounds containing magnesium ions or calcium ions.

In the present disclosure, the crystal structures of calcium glutamate (molecular weight 404.39 g/mol) and magnesium glutamate (molecular weight 241.49 g/mol) were confirmed via single-crystal X-ray diffraction, and the concentrations of the chelates were calculated based on the mother liquor concentrations during the chelation process. When the concentration of calcium oxide (CaO) or magnesium oxide (MgO) in the mother liquor was 1% (w/v), the corresponding concentrations of calcium glutamate and magnesium glutamate were approximately 0.178 M (approximately 72.1 g/L, 7.21% w/v) and 0.248 M (approximately 59.9 g/L, 5.99% w/v), respectively.

### Example 1: Effects of Glutamic Acid-Metal Complexes to Plants Under Biotic Stress

In the embodiment, 12 *Brassica rapa chinensis* were co-cultured with *Fusarium oxysporum*-a fungus that causes crop wilt-and 300 aphids, of which 6 plants constituted the experimental group treated once weekly with a solution containing 60 ppm calcium glutamate and 80 ppm magnesium glutamate, while the other 6 plants constituted the control group treated once weekly with water. In this setup, three plants were planted in each pot, and each pot was irrigated with 500 mL of the glutamate-metal complex or water.

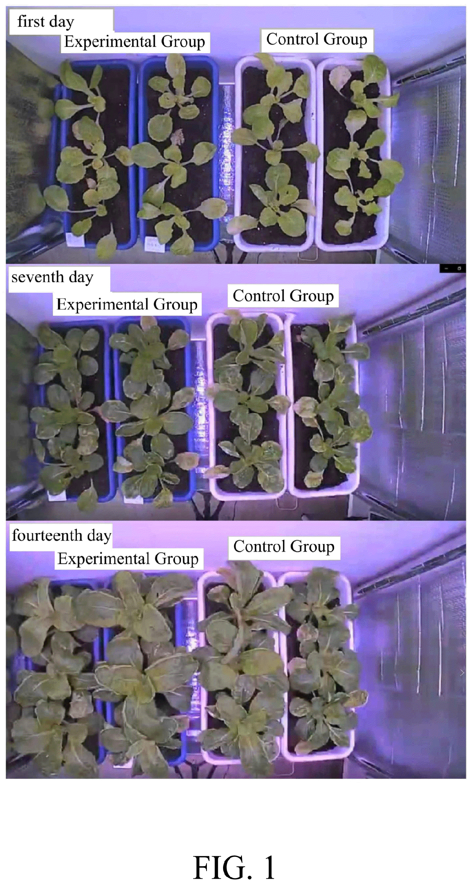

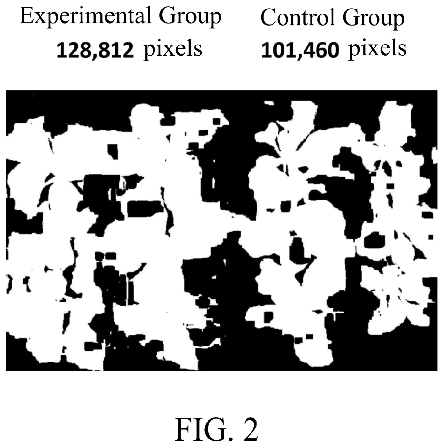

FIG. 1 shows that on the first day of treatment, there was no difference between the experimental group and the control group; the size of the leaves in both groups was nearly identical; on the seventh day after infection with *Fusarium* and co-cultivation with aphids, followed by applying the amino acid-metal complex, the experimental group exhibited less leaf wilting and yellowing compared to the control group, and the leaves appeared more expanded overall; by the fourteenth day, the leaf size of experimental group was significantly larger than that of the control group. Analysis of photographs taken on day 14 of both the experimental and control groups, quantifying the total leaf area of each, obtained the results shown in FIG. 2. The leaf area of the experimental group increased by 26.96% compared to the control group.

Furthermore, the number of aphids per sample was calculated. The aphid counts in the experimental group were 11, 5, 3, 13, 9, and 17, totaling 58; whereas the aphid counts in the control group were 287, 357, 480, 340, 478, and 547, totaling 2,489.

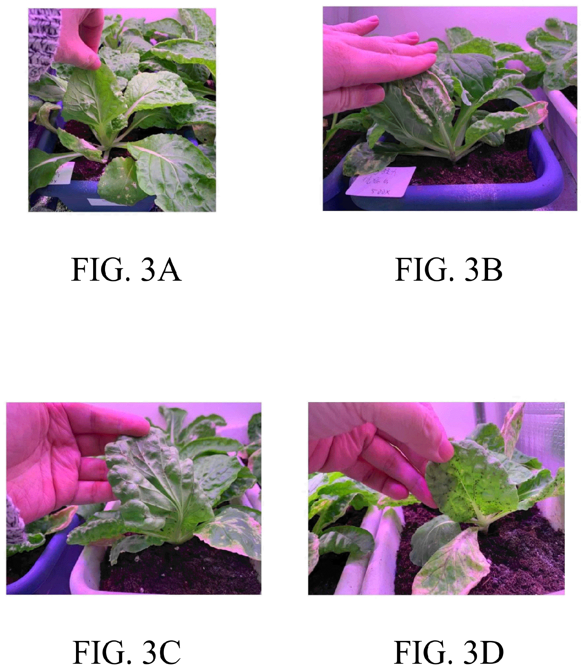

As shown in FIG. 3A, samples with minor pest damage in the experimental group showed no obvious aphid marks on the underside of the leaves. In contrast, samples with minor pest damage in the control group (FIG. 3C) exhibited distinct small brown spots. In contrast, in FIG. 3B, samples from the experimental group with more severe pest damage showed scattered brown spots on the underside of the leaves, while in FIG. 3D, samples from the control group with more severe pest damage exhibited dense clusters of brown spots on the underside of the leaves.

In this embodiment, as shown in FIGS. 1 and 2, the application of calcium glutamate and magnesium glutamate to *Brassica rapa chinensis* infected with fungi affecting crop growth prevents wilting and results in better growth compared to plants not treated with the complex. On the other hand, regarding pest damage, based on changes in aphid counts, the initial population of 300 aphids was reduced to 58 after applying the calcium glutamate and magnesium glutamate, achieving a 95% repellency rate in the experimental group. In contrast, the untreated group saw the aphid population surge to 2,489, indicating that the application of calcium glutamate and magnesium glutamate can effectively mitigate the impact of pests and diseases on plants.

### Example 2: Effects of Glutamic Acid-Metal Complexes to Plants Under Abiotic Stress

### 2-1. High-Temperature and Water-Deficient Environment

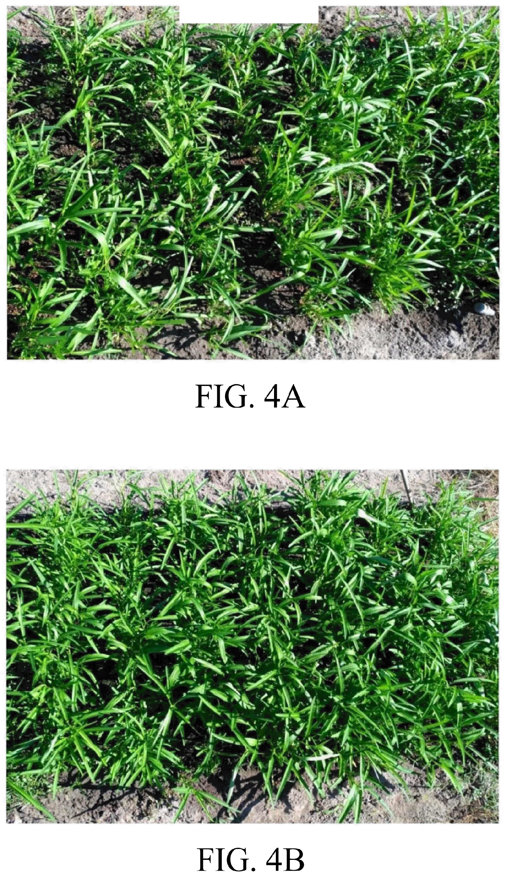

In this embodiment, water spinach was grown under high-temperature and water-deficient conditions to observe plant growth with and without the application of the calcium glutamate and magnesium glutamate. The results are shown in FIGS. 4A and 4B. As shown in FIG. 4B, water spinach treated with 150 ppm calcium glutamate and 120 ppm magnesium glutamate (experimental group: irrigated with 150 mL per plant, once a week, for a total of four times) had significantly more lush foliage compared to the water spinach in FIG. 4A that was not treated with calcium glutamate and magnesium glutamate (control group), and its overall growth vigor was higher, indicating that the application of calcium glutamate and magnesium glutamate helps plants maintain better growth performance under abiotic stress conditions.

### 2-2. Heavy Rain Environment

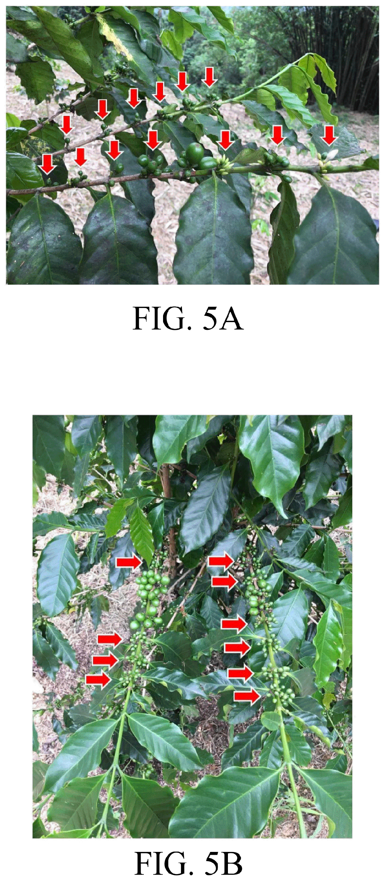

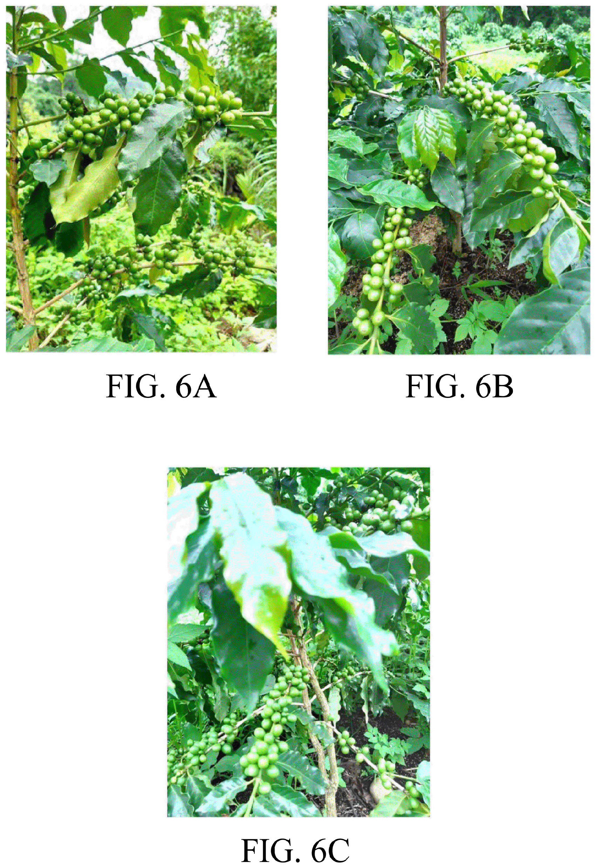

In this embodiment, 5 L of 240 ppm calcium glutamate and 200 ppm magnesium glutamate were applied to each coffee tree that had suffered massive flower and fruit drop due to heavy rain, once a week for a total of four times. The results are shown in FIGS. 5A and 5B, where it can be seen that after application, flowers and fruits regrew at the original sites of flower and fruit drop (indicated by red arrows); and as shown in FIGS. 6A-6C, the growth rate of these secondary flowers and fruits caught up with that of the primary fruits that had not been knocked off by the heavy rain. It is evident that the application of calcium glutamate and magnesium glutamate has a significant restorative effect on plants that had massive flower and fruit drop due to climatic conditions.

### 2-3. Chemical Pesticide Damage

In this embodiment, 500 mL of 240 ppm calcium glutamate and 200 ppm magnesium glutamate were sprayed onto the leaves of each Malabar chestnut tree once a week for a total of four times; 300 mL of 240 ppm calcium glutamate and 200 ppm magnesium glutamate were sprayed onto the leaves of each cabbage once a week for a total of four times.

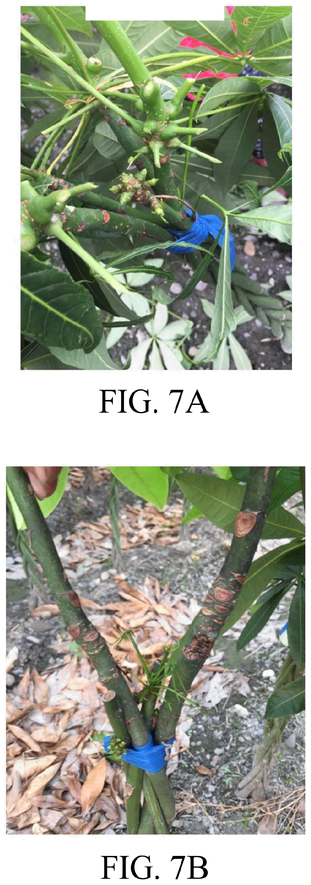

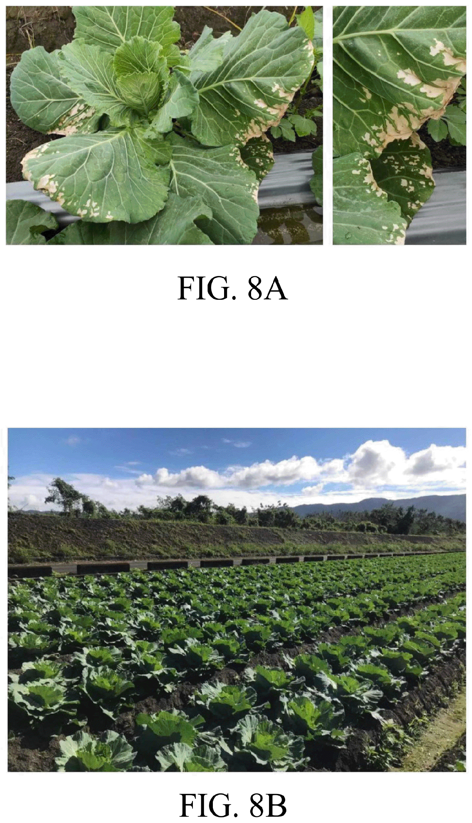

As shown in FIGS. 7A and 8A, after applying the herbicides Ametryn and Glufosinate (FIG. 7A) or Bentazone (FIG. 8A), the Malabar chestnut and cabbage exhibited curled shoots and stunted growth at the sites of new shoots, with many leaves showing yellowing and wilting; however, after applying the calcium glutamate and magnesium glutamate, new shoots were observed growing at the growth points of the Malabar chestnut in FIG. 7B; and referring to FIG. 8B, the cabbage resumed growth and the plants exhibited a healthy green color.

As shown in FIGS. 7 and 8, the application of calcium glutamate and magnesium glutamate to plants damaged by pesticides helps restore plant growth.

In summary, the results of Examples 1 and 2 indicate that the application of the glutamate-metal complexes, calcium glutamate and magnesium glutamate, can significantly reduce wilting and yellowing in plants under biotic stress conditions, such as fungal infections and insect pests, and effectively reduce the number of pests and their impact on the plants; under abiotic stress conditions, such as high temperatures, water deficiency, flower and fruit drop, and pesticide damage, they help restore the growth of damaged plants.

Compared to the prior art, which removes heavy metals from soil or plants by utilizing the metal-chelating ability of amino acids, the present disclosure increases plant tolerance to abiotic and biotic stresses through complexes formed by the chelation of specific amino acids with specific metal ions; it also differs from most prior art in that, whereas previous research on enhancing plant stress tolerance focused on a single stress, the results of the embodiments described herein demonstrate that the present disclosure can enhance plant tolerance or resilience to multiple stresses.

The present disclosure has been disclosed above in preferred embodiments; however, those skilled in the art will understand that these embodiments are intended merely to illustrate the disclosure and should not be construed as limiting the scope of the disclosure. It should be noted that any variations and substitutions equivalent to the embodiments should be considered to fall within the scope of the present disclosure. Therefore, the scope of protection of the present disclosure shall be defined by the claims.

## Claims

1. A glutamic acid-metal complex, wherein the metal is an alkaline earth metal ion.

2. The glutamic acid-metal complex according to claim 1, wherein the alkaline earth metal ion is a magnesium ion or a calcium ion.

3. The glutamic acid-metal complex according to claim 2, wherein if the alkaline earth metal ion is the magnesium ion, its structure is represented by the following formula (I); if the alkaline earth metal ion is the calcium ion, its structure is represented by the following formula (II):

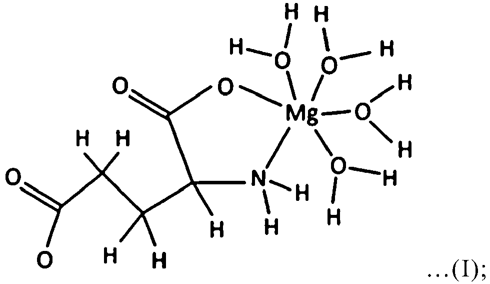

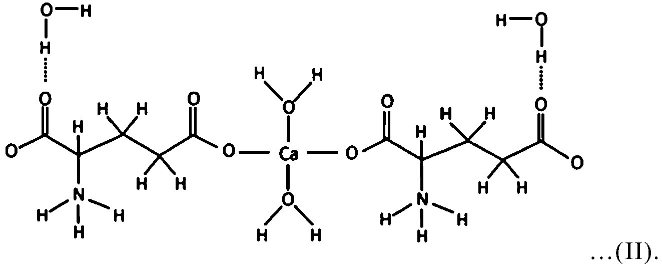

4. Use of the glutamic acid-metal complex according to claim 1, wherein the use is for enhancing plant tolerance to a stress condition.

5. The use according to claim 4, wherein the stress condition comprises a biotic stress or an abiotic stress.

6. The use according to claim 5, wherein the biotic stress includes a fungus, a bacterium, a microorganism or an insect; and the abiotic stress includes an extreme weather condition or an herbicide damage.

7. The use according to claim 6, wherein the fungus is *Fusarium.*

8. The use according to claim 4, wherein enhancing plant tolerance to the stress condition is to promote plant growth, increase yields, or help crops under stress resume fruit set.

9. The use according to claim 4, wherein enhancing plant tolerance to the stress condition is to increase fruit tolerance to stresses of storage and transport, increase fruit water content, or increase fruit size.

10. The use according to claim 4, wherein a use amount of the glutamic acid-metal complex is 250 ppm or less.
